(19) Europäisches Patentamt
European Patent Office
Office européen des brevets

(11) Publication number: **0 059 224**
**B1**

(12) **EUROPEAN PATENT SPECIFICATION**

(45) Date of publication of patent specification: **03.12.86**

(51) Int. Cl.[4]: **G 11 B 5/09**, H 04 L 25/49

(21) Application number: **81902455.5**

(22) Date of filing: **04.09.81**

(86) International application number: **PCT/JP81/00218**

(87) International publication number: **WO 82/00912 18.03.82 Gazette 82/08**

# (54) SYSTEM FOR CODING AND DECODING BINARY DATA.

(30) Priority: **05.09.80 JP 124459/80**
**05.09.80 JP 124460/80**

(43) Date of publication of application: **08.09.82 Bulletin 82/36**

(45) Publication of the grant of the patent: **03.12.86 Bulletin 86/49**

(84) Designated Contracting States: **DE FR GB**

(56) References cited:
**FR-A-2 269 823**
**JP-A-53 011 011**
**US-A-3 905 029**
**US-A-3 906 485**
**US-A-4 146 909**
**US-A-4 150 404**

**IBM TECHNICAL DISCLOSURE BULLETIN, vol. 17, no. 5, October 1974, NEW YORK (US), H. MIESSLER: "Translator for run length limited code", pages 1489-1491**

**PATENTS ABSTRACTS OF JAPAN, vol. 3, no. 150, December 11, 1979, page 59 E 158**

**IBM TECHNICAL DISCLOSURE BULLETIN, vol. 23, no. 1, June 1980, NEW YORK (US), R.E. JENKINS: "1F/2F Phase alignment system", pages 318-319**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **FURUKAWA, Teruo Mitsubishi Denki K.K.**
**Oyokiki Kenkyosho, 80 Azanakano**
**Minamishimizu**
**Amagasaki-shi Hyogo 661 (JP)**

(74) Representative: **Lawson, David Glynne**
**MARKS & CLERK 57-60 Lincoln's Inn Fields**
**London WC2A 3LS (GB)**

(56) References cited:
**IEEE TRANSACTIONS ON MAGNETICS, vol. MAG-12, no. 6, November 1976, NEW YORK (US), T. HORIGUCHI et al.: "An optimization of modulation codes in digital recording", pages 740-742**

**IBM-Journal of research and development, vol. 14, no. 4, (1970), P.A. Franaszek "Sequence-state methods for run-length-limited coding", p. 376-383**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 059 224 B1

**Description**

Technical field

This invention relates to a binary data encoding system for converting a sequence of binary data to a sequence of binary codes suitable for the recording upon recording the original binary data on a record medium such as a magnetic tape or a magnetic disc, and a decoding system for decoding and converting the sequence of converted binary codes upon reproducing it from the record medium.

Background art

In order to increase a recording density upon recording binary data on a record medium such as a magnetic tape or a magnetic disc there are previously proposed and practiced various encoding systems.

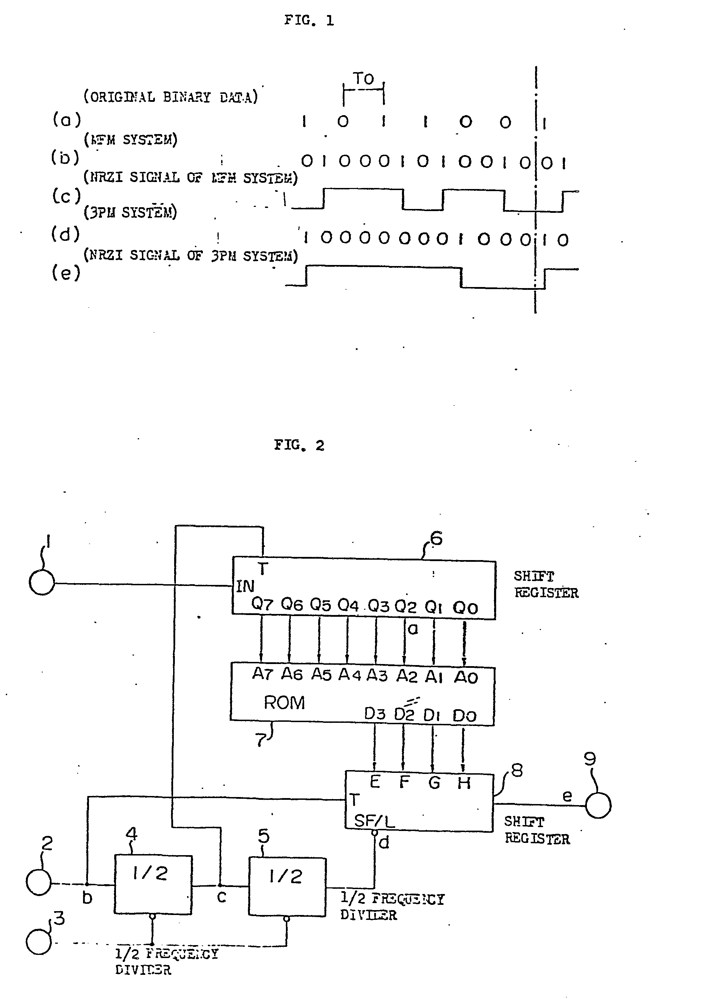

Figure 1 is an explanatory diagram of one example of a conventional encoding system and Figure 1(a) shows one example of a bit pattern of an original binary data sequence wherein numerals 0 and 1 express logic "0" and "1" respectively and $T_0$ indicates a bit interval. The same Figures (b) and (d) are one example of conventional encoding systems, the same Figure (b) is called an MFM system (modified FM system) and the same Figure (d) is called a 3 PM system (3 position modulation systems). As examples of sorts of appliances applied to the respective systems, the MFM system is used with magnetic disc devices (3330, 3340, 3350 etc.) of IBM firm and the 3 PM system is used with a magnetic disc device (8434) of Uniback firm.

A conversion algorithm of the MFM system is to convert bits "1" and "0" of an original binary data sequence to "01" and "X0" respectively where "X" becomes a complement logic (1→0 or 0→1) of a code bit just preceding thereto. Also a conversion algorithm of the 3 PM system is to divide original data into 3-bit units to convert them to a 6-bit code as shown in the following First Table:

1ST TABLE
Conversion algorithm of 3 PM system

| Original data | Converted code | Conditions |
|---|---|---|
| 000 | 000010 | When a pattern of "101" is generated in a code sequence after the conversion it is changed to "010" |
| 001 | 000100 | |
| 010 | 010000 | |
| 011 | 010010 | |
| 100 | 001000 | |
| 101 | 100000 | |
| 110 | 100010 | |
| 111 | 100100 | |

Further a sequence of codes converted according to each of the encoding systems is such that recording currents are generated and recorded on a record medium so as to cause an inversion of magnetization with bits of "1" but not to cause an inversion of magnetization with bits of "0". Figures 1(c) and (e) are waveforms of the recording currents (NRZI signals) for the code sequences encoded according to the MFM system of the same Figure (b) and the 3PM systems of the same Figure (d) respectively.

In the case the recording is generally effected on a record medium,

(a) if a spacing between the inversions of magnetization (a recording wavelength) is shortened then magnetic transistions due to the front and rear inversions of magnetization interfere with each other to result in a cause for generating errors upon decoding a reproduced signal;

(b) even if a demodulation phase margin (Tw) (which will be described later) during the reproduction is small with respect to the spacing between the inversions of magnetization, the abovementioned errors are apt to be caused;

(c) if the spacing between the inversions of magnetization is long as compared with a period of a demodulating clock signal produced from a reproduced signal then the demodulating clock signal can not be accurately produced from the reproduced signal and the abovementioned errors are apt to be caused; and

(d) if the spacing between the inversions of magnetization increases in ratio of its maximum to its minimum then the reproduced signal increases in waveform interference (which is called a pattern peak shift) and the abovementioned errors are apt to be caused.

In general encoding systems, therefore, the undermentioned variables are given as the parameters indicating the ability including the four items (a), (b), (c) and (d) as described above. Now assuming that in same encoding system a sequence of m-bit binary data is converted to a sequence of n-bit binary codes ($n \geqq m$) and between a code bit "1" selected at will from the code sequence after the conversion and a code bit "1" next developed there exist code bits "0" whose number has a minimum of d and a maximum of k, the following expressions (1) to (4) hold:

$$T_{min}\begin{pmatrix}\text{minimum spacing between}\\ \text{inversions of}\\ \text{magnetization}\end{pmatrix} = \frac{m}{n}(d+1)T_0 \quad (1)$$

$$T_{max}\begin{pmatrix}\text{maximum spacing between}\\ \text{inversions of}\\ \text{magnetization}\end{pmatrix} = \frac{m}{n}(k+1)T_0 \quad (2)$$

$$C_{LK}\begin{pmatrix}\text{period of demodulating}\\ \text{clock signal}\end{pmatrix} = \frac{m}{n}T_0 \quad (3)$$

and

$$T_W\begin{pmatrix}\text{demodulation}\\ \text{phase margin}\end{pmatrix} = \frac{m}{n}T_0 \quad (4)$$

where $T_0$ is a period of original data.

Accordingly from the foregoing description values of the expressions (1) and (2) are preferably larger (the abovementioned items (a) and (b)) and also the undermentioned ratio of the spacing between the inversions of maximum magnetization to the period of the demodulating clock signal (the expression (5)) and the undermentioned ratio of the spacing between the inversions of maximum magnetization to that between the inversions of minimum magnetization (the expression (6)) are preferably smaller (the abovementioned items (c) and (d)).

$$\frac{T_{max}}{C_{LK}} = \frac{m}{n}(k+1)T_0 / \frac{m}{n}T_0 = k+1 \quad (5)$$

$$\frac{T_{max}}{T_{min}} = \frac{m}{n}(k+1)T_0 / \frac{m}{n}(d+1)T_0 = \frac{k+1}{d+1} \quad (6)$$

Japanese Patent Publication A 54—130111 (Application No. 53—36828) describes a binary data encoding system, which divides a binary data sequence at intervals of two bits, and converts the divided two-bit data to codes each consisting of four bits of the same characteristics as the three P.M. coded signals.

The present invention comprises a binary data encoding system dividing a binary data sequence at intervals of two bits and converting said divided 2-bit data to codes each consisting of four bits, characterised in that data are sensed within a range of six bits immediately preceding the 2-bit data and also within a range of six bits immediately succeeding thereto, said data thus sensed and, in combination with the complement (Y, Z) of the logical sum of either the last two code bits of the preceding 4-bit code or the first two code bits of the succeeding 4-bit code, utilized to convert said 2-bit data to said 4-bit codes in such a way that no less than two to not more than eight "0" code bits are caused to exist between any code bit "1" of said converted code sequence and a code bit "1" next developed therein.

For comparison of the MFM system, the 3PM system and the encoding system according to the present invention, the above-mentioned parameters are shown in the following table.

2ND TABLE
Table of comparison of parameters in respective encoding systems

| Parameter / Mod. system | $T_{min}$ | $T_W$ | $T_{max}/C_{LK}$ | $T_{max}/T_{min}$ |
|---|---|---|---|---|
| MFM system | $0.5T_0$ | $0.5T_0$ | 4 | 2 |
| 3 PM System | $1.5T_0$ | $0.5T_0$ | 12 | 4 |
| System of this invention | $1.5T_0$ | $0.5T_0$ | 9 | 3 |

As shown in the second Table, the invention is a substantial improvement over the MFM system in spacing between the inversions of minimium magnetization, and over the 3 PM system in ability to produce the demodulating clock signal from a reproduced signal (the spacing between the inversions of maximum magnetization/the period of the demodulating clock signal) and in ability of reproduced waveforms to interfere with one another (the spacing between the inversions of maximium magnetization/the spacing between inversions of minimum magnetization). Also it can decrease the occurrence of errors during the decoding.

In the drawings:—

Figure 1 shows explanatory diagrams of conventional encoding systems of the MFM and 3 PM systems;

Figure 2 is a block diagram of circuitry operating with a first encoding system according to the present invention;

Figure 3 is a block diagram of circuitry operating with another encoding system according to the present invention;

Figure 4 is a timing chart for explaining the operation of the embodiments shown in Figures 2 and 3;

Figure 5 is a block diagram of further circuitry operating with a decoding system according to the present invention; and

Figure 6 is a timing chart for explaining the operation of the embodiment shown in Figure 5.

Best mode for carrying out the invention

The present invention will hereinafter be described in detail in conjunction with embodiments shown in the accompanying drawings. The undermentioned Third and Fourth Tables are one concrete example of a conversion algorithm of a novel encoding system. The conversion algorithm is to divide first original data at intervals of two bits and convert those divided 2-bit data to 4-bit codes following the rule of the Third or Fourth Table. By observing code sequences converted in accordance with the foregoing conversion algorithm, $T_W=0.5T_0$ results because the parameters hold $m/n=2/4=0.5$.

3RD TABLE
Table (1) of conversion algorithm of novel encoding system

| Original data | Converted code | Conditions |
|---|---|---|
| 11 | Y000 | |
| 01 | 0010 | |
| 10 | 0100 | "$E_2E_1$"≠"10" and "$L_1L_2$"="00" |
| 10 | 0001 | "$E_2E_1$"="10" and "$L_1L_2$"="00" |
| 10 | 0000 | "$E_2E_1$"="10", "$L_1L_2$"="10" and "$L_3L_4$"="00" |
| 10 | 0100 | "$E_2E_1$"≠"10", "$L_1L_2$"="10" and "$L_3L_4$"="00" |
| 10 | Y001 | All cases except the foregoing ones |
| 00 | 0000 | "$E_2E_1$"="10" |
| 00 | 0100 | All cases except the foregoing ones |

where

$E_n$: data bits preceding by n-bits, 2-bit data to be converted in original data sequence

$L_n$: data bits succeeding by n-bits, 2-bit data to be converted in original data sequence and

Y: complement logic of logical sum of two bits immediately before code bit Y in converted code sequence supplimentation

A: Explanation of $E_1$ to $E_2$ and $L_1$ to $L_2$

0 1 0 1 1 0 1 0 0 1
Original data sequence
E2
E1
2-Bit data to be converted
L1
L2
L3
L4

B: Explanation of Y

| | 0010 | 0010 | Y001 | Y001 | 0010 | |
|---|---|---|---|---|---|---|

Converted code sequence

1→ 0

4TH TABLE
Table (2) of conversion algorithm of novel encoding system

| Original data | Converted code | Conditions |
|---|---|---|
| 11 | Y000 | |
| 01 | 0010 | |
| 10 | 0100 | "$E_2E_1$"≠"10" and "$L_1L_2$"="00" |
| 10 | 0001 | "$E_2E_1$"="10" and "$L_1L_2$"="00" |
| 10 | 0000 | "$E_2E_1$"="10", "$L_1L_2$"="10" and "$L_3L_4$"="00" |
| 10 | 0100 | "$E_2E_1$"≠"10", "$L_1L_2$"="10" and "$L_3L_4$"="00" |
| 10 | Y001 | All cases except the foregoing ones |
| 00 | 0000 | "$E_2E_1$"="10" and "$E_4E_3$"≠"10" |
| 00 | 0010 | "$E_2E_1$"="10" and "$E_4E_3$"="10" |
| 00 | 0100 | All cases except the foregoing ones |

Also in the case the Third Table is used as patterns when the conversion gives d and k, original data

... 01 00 11 ... results in converted codes
↓ ↓ ↓
.. "0010" "0100" "1000" .. and d=2 holds.

Also original data

... 01 10 00 01 ... results in converted codes
↓ ↓ ↓ ↓
.. "0010" "0100" "0000" "0010" .. and k=8 holds.

In this way d=2 and k=8 are given and it will be understood that the Second Table is fulfilled as the abilities of the parameters.

Subsequently regarding the conversion algorithm shown in the Third Table the ruling property of its conversion is considered. Further the Fourth Table is of a conversion into which the Third Table is partly revised and concretely identical to the Third Table.

The ruling properly is to divide original data at intervals of two bits and convert them in accordance with the fundamental conversion table of a Fifth Table.

5TH TABLE
Fundamental conversion table of novel encoding system

| Original data | Converted code |
|---|---|
| 11 | Y000 |
| 01 | 0010 |
| 10 | Y001 |
| 00 | 0100 |

Y=complement of logical sum of the two bits immediately before code bit Y in the converted code sequence

| Y | Two bits immediately before code bit Y |
|---|---|
| 1 | "00" |
| 0 | All cases except for "00" |

From the fundamental conversion table of the Fifth Table it is understood that not more than d=2 and k=8 are satisfied in the conversion unless "10" and "00" express two consecutive patterns each including two bits in the original data to be converted. Therefore upon the occurrence of the patterns "10" and "00", the conversion of all the patterns is arranged to satisfy d=2 and k=8 by changing the fundamental conversion table of the Fifth Table to the revised conversion method as shown in the Third and Fourth Tables.

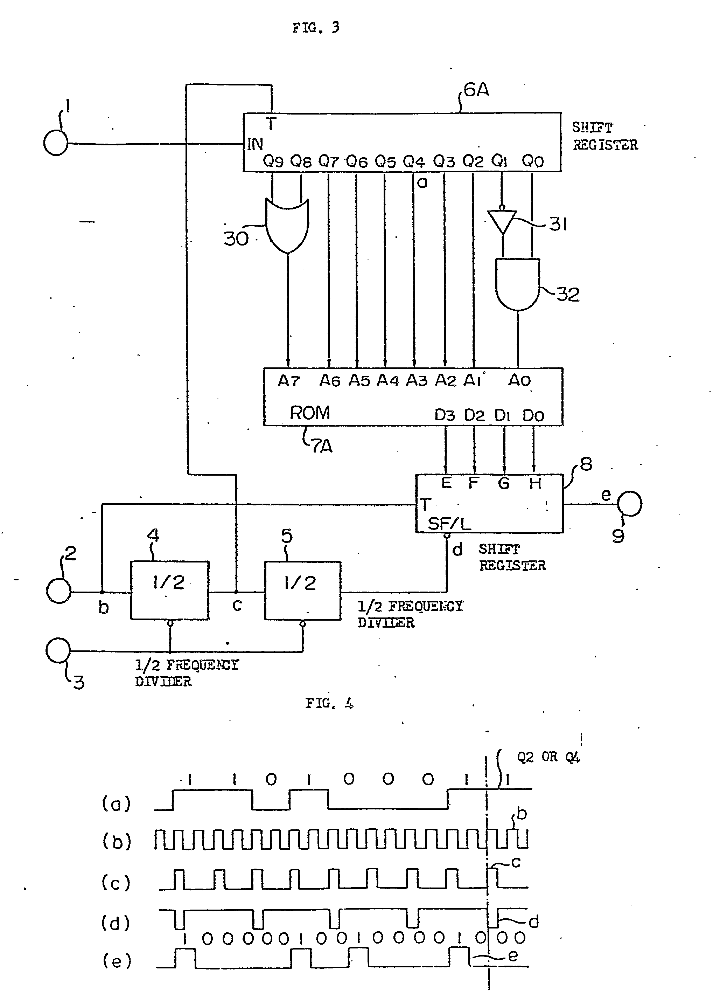

Figure 2 is a block diagram of one embodiment to which an encoding system according to the present invention is applied and Figure 4 is a timing chart for explaining its operation. In Figure 2 the original data are entered into a shift register (6) through an input terminal (1). Also an input terminal 2 has entered thereinto a clock signal b (Figure 4(b)) which signal doubles a clock signal for the original data and further the clock signal b is frequency divided into a signal c with a frequency divided by 2 (Figure 4(c)) and a signal d with a frequency divided by 4 (Figure 4(d)) by 1/2 frequency dividers (4) and (5) respectively. In a shift resistor (serial in-parallel out) (6) the entered original data are delayed one bit at a time with the clock signal c applied to a terminal (T) and delivered through data output terminals ($Q_7$ to $Q_0$). A signal a delivered at that time through the output terminal ($Q_2$) is shown in Figure 4(a). Data outputs ($Q_7$ to $Q_0$) are entered into input terminals ($A_7$ to $A_0$) to an ROM (a read only memory, for example, SN74S471N of TI firm or the like) having an algorithm shown in the undermentioned Sixth Table and a code converted output signal is provided through its output terminals ($D_3$ to $D_0$).

6TH TABLE
Table (1) of algorithm of converting ROM of novel encoding system

| Input address | | | | | | | | Output pattern | | | |
|---|---|---|---|---|---|---|---|---|---|---|---|
| $A_0$ | $A_1$ | $A_2$ | $A_3$ | $A_4$ | $A_5$ | $A_6$ | $A_7$ | $D_0$ | $D_1$ | $D_2$ | $D_3$ |
| 1 | 1 | 1 | 1 | | | | | 1 | 0 | 0 | 0 |
| 0 | 0 | 1 | 1 | | | | | 1 | 0 | 0 | 0 |
| | | 0 | 1 | | | | | 0 | 0 | 1 | 0 |
| 0 | 0 | 1 | 0 | 0 | 0 | | | 0 | 1 | 0 | 0 |
| 0 | 1 | 1 | 0 | 0 | 0 | | | 0 | 1 | 0 | 0 |
| 1 | 1 | 1 | 0 | 0 | 0 | | | 0 | 1 | 0 | 0 |
| 0 | 0 | 1 | 0 | 1 | 0 | 0 | 0 | 0 | 1 | 0 | 0 |
| 0 | 1 | 1 | 0 | 1 | 0 | 0 | 0 | 0 | 1 | 0 | 0 |
| 1 | 1 | 1 | 0 | 1 | 0 | 0 | 0 | 0 | 1 | 0 | 0 |
| 1 | 1 | 1 | 0 | Z | | | | 1 | 0 | 0 | 1 |
| 0 | 0 | 1 | 0 | Z | | | | 1 | 0 | 0 | 1 |
| 0 | 1 | 1 | 0 | Z | | | | 0 | 0 | 0 | 1 |
| 1 | 0 | 1 | 0 | R | | | | 0 | 0 | 0 | 1 |
| 0 | 0 | 0 | 0 | | | | | 0 | 1 | 0 | 0 |
| 0 | 1 | 0 | 0 | | | | | 0 | 1 | 0 | 0 |
| 1 | 1 | 0 | 0 | | | | | 0 | 1 | 0 | 0 |
| All addresses except for the foregoing ones | | | | | | | | 0 | 0 | 0 | 0 |

where

Z: All addresses $A_4$ to $A_7$ satisfying "$A_4A_5$"≠"00" and "$A_4A_5A_6A_7$"≠"1000"

R: All addresses $A_4$ to $A_7$ satisfying "$A_4A_5A_6A_7$"≠"1000" and portions with the diagonal have no address appointed thereto and therefore have any values

This 4-bit output is entered into a shift register (parallel in-serial out) (8) at the resetting terminals (H to E). More specifically, a presetting signal is latched with a synchronized timing signal d (Figure 4d) applied to a terminal (SF/I) for each of 2-bit data to be converted and converted 4-bit codes are delivered, as a serial output signal e (Figure 4e), to an output terminal (9) by means of the clock signal b (Figure 4b) applied to the terminal (T). Further because of the necessity of causing the right synchronization of two bits of the data to be converted, the 1/2 frequency dividers (4) and (5) are set in polarity with a synchronization sensing signal (which is entered into an input terminal (3)) such as a data synchronizing signal inserted into the original data sequence for each of predetermined bit lengths.

It will be understood that the pattern (11010001) of the original data shown in Figure 4(a) is converted to a code pattern (1000001001000010) through that operation.

The undermentioned Seventh and Eighth Tables are other concrete examples of the conversion algorithm of the novel encoding system. As in the Third and Fourth Tables as described above, the original data are first divided at intervals of two bits and those divided 2-bit data are converted to 4-bit codes following the rule of the Seventh or Eighth Table. By observing a code sequence converted in accordance with the foregoing conversion algorithm, $T_W=0.5T_0$ results because the parameters hold m/n=2/4=0.5.

7TH TABLE
Table (3) of conversion algorithm of novel encoding system

| Original data | Converted code | Conditions |
|---|---|---|
| 11 | Y000 | |
| 01 | 0010 | |
| 10 | 0100 | "$E_2E_1$"≠"10" and "$L_1L_2$"="00" |
| 10 | 0001 | "$E_2E_1$"="10" and "$L_1L_2$"="00" |
| 10 | 0000 | "$E_2E_1$"="10", "$L_1L_2$"="10" and "$L_3L_4$"="00" |
| 10 | 0100 | "$E_2E_1$"≠"10", "$L_1L_2$"="10" and "$L_3L_4$"="00" |
| 10 | Y001 | All cases except the foregoing ones |
| 00 | 0000 | "$E_4E_3$"≠"10", "$E_2E_1$"="10" and "$L_1L_2$"≠"01" |
| 00 | 0001 | "$E_4E_3$"≠"10", "$E_2E_1$"="10" and "$L_1L_2$"="01" |
| 00 | 0000 | "$E_2E_1$"="10" |
| 00 | 0100 | All cases except the foregoing ones |

8TH TABLE
Table (4) of conversion algorithm of novel encoding system

| Original data | Converted code | Conditions |
|---|---|---|
| 11 | Y000 | |
| 01 | 0000 | "$E_6E_5$"≠"10", "$E_4E_3$"="10" and "$E_2E_1$"="00" |
| 01 | 0010 | Except the foregoing |
| 10 | 0100 | "$E_2E_1$"≠"10" and "$L_1L_2$"="00" |
| 10 | 0001 | "$E_2E_1$"="10" and "$L_1L_2$"="0" |
| 10 | 0000 | "$E_2E_1$"="10", "$L_1L_2$"="10" and "$L_3L_4$"="00" |
| 10 | 0100 | "$E_2E_1$"≠"10", "$L_1L_2$"="10" and "$L_3L_4$"="00" |
| 10 | Y001 | All cases except the foregoing ones |
| 00 | 0000 | "$E_4E_3$"≠"10", "$E_2E_1$"="10" and "$L_1L_2$"≠"01" |
| 00 | 0001 | "$E_4E_3$"≠"10", "$E_2E_1$"="10" and "$L_1L_2$"="01" |
| 00 | 0010 | "$E_4E_3$"="10" and "$E_2E_1$"=10 |
| 00 | 0100 | All cases except the foregoing ones |

Also in the case the Seventh Table is used as patterns when the conversion gives d and k, original data

```
... 01      00      11   ... results in converted codes
     ↓       ↓       ↓
.. "0010" "0100" "1000" .. and d=2 holds.
```

Also original data

```
... 01      10      00      00   ... results in converted codes
     ↓       ↓       ↓       ↓
.. "0010" "0100" "0000" "0100" .. and k=7 holds.
```

It is understood that d=2 and k=7 are given in this way and satisfy the Second Table.

Then regarding the conversion algorithm shown in the Seventh Table the ruling property of its conversion is considered. The Eighth Table is a conversion into which the Seventh Table has been partly revised and basically the same as the Seventh Table.

From the fundamental conversion table of the abovementioned Fifth Table it is understood that d=2 and k=7 are satisfied in the conversions except for the pattern ("10" "00") of the original data to be converted. Therefore upon the occurrence of the pattern ("10" "00"), d=2 and k=7 are caused to be satisfied in all the conversions of the patterns by changing the fundamental conversion table of the Fifth Table to the revised conversion methods as shown in the Seventh and Eighth Tables.

Figure 3 is a block diagram of another embodiment to which another encoding system according to the present invention is applied and the timing chart of Figure 4 is also used with that embodiment. Differences between, the other embodiment shown in Figure 3 and the one embodiment shown in Figure 2 reside in that (a) a shift register (6A) has, in addition to the output terminals ($Q_7$ to $Q_0$), output terminals ($Q_9$ to $Q_8$), (b), an OR gate (30), a NOT gate (31) and an AND gate (32) newly added thereto. (As a result, the output terminal $Q_0$ is directly connected to one input to the AND gate (32), the output terminal ($Q_1$) is connected to the other input to the AND gate (32) through the NOT gate (31), an output terminal of the AND gate (32) is connected to an input terminal ($A_0$) to an ROM (7A), each of the output terminals ($Q_2$ to $Q_7$) is individually connected to each of the input terminals ($A_1$ to $A_6$), the output terminal ($Q_8$) is connected to one input to the OR gate (30), the output terminal ($Q_9$) is connected to the other input terminal to the OR gate (3) and an output terminal of the OR gate (30) is connected to the input terminal ($A_7$)), (c) the signal as shown in Figure 4(a) is obtained at the output terminal ($Q_4$), and (d) the ROM (7A) has an algorithm as shown in the following Ninth Table.

9TH TABLE
Table (2) of algorithm of converting ROM of novel encoding system

| No. | Input address | | | | | | | | Output pattern | | | | Conditions for input address |
|---|---|---|---|---|---|---|---|---|---|---|---|---|---|
| | $A_0$ | $A_1$ | $A_2$ | $A_3$ | $A_4$ | $A_5$ | $A_6$ | $A_7$ | $D_0$ | $D_1$ | $D_2$ | $D_3$ | |
| 1 | \ | 1 | 1 | 1 | 1 | \ | \ | \ | 1 | 0 | 0 | 0 | |
| 2 | \ | 0 | 0 | 1 | 1 | \ | \ | \ | 1 | 0 | 0 | 0 | |
| 3 | \ | 0 | 1 | 1 | 1 | \ | \ | \ | 0 | 0 | 0 | 0 | |
| 4 | \ | 1 | 0 | 1 | 1 | \ | \ | \ | 0 | 0 | 0 | 0 | |
| 5 | \ | \ | \ | 0 | 1 | \ | \ | \ | 0 | 0 | 1 | 0 | |
| 6 | \ | 1 | 0 | 1 | 0 | 0 | 0 | \ | 0 | 1 | 0 | 0 | Except address "$A_1A_2$"="10" |
| 7 | \ | 1 | 0 | 1 | 0 | 0 | 0 | \ | 0 | 0 | 0 | 1 | |
| 8 | \ | 1 | 0 | 1 | 0 | 1 | 0 | 0 | 0 | 0 | 0 | 0 | |
| 9 | \ | 1 | 0 | 1 | 0 | 1 | 0 | 0 | 0 | 1 | 0 | 0 | Except address "$A_1A_2$"="10" |
| 10 | \ | 1 | 1 | 1 | 0 | \ | \ | \ | 1 | 0 | 0 | 1 | Except addresses shown by Nos. 6 to 9 |
| 11 | \ | 0 | 0 | 1 | 0 | \ | \ | \ | 1 | 0 | 0 | 1 | Ditto |
| 12 | \ | 0 | 1 | 1 | 0 | \ | \ | \ | 0 | 0 | 0 | 1 | Ditto |
| 13 | \ | 1 | 0 | 1 | 0 | \ | \ | \ | 0 | 0 | 0 | 1 | Ditto |
| 14 | 0 | 1 | 0 | 0 | 0 | 0 | 1 | \ | 0 | 0 | 0 | 0 | Except address "$A_5A_6$"="01" |
| 15 | 0 | 1 | 0 | 0 | 0 | 0 | 1 | \ | 0 | 0 | 0 | 1 | |
| 16 | 1 | 1 | 0 | 0 | 0 | \ | \ | \ | 0 | 0 | 0 | 0 | Except addresses shown by Nos. 14 to 16 |
| 17 | \ | \ | \ | 0 | 0 | \ | \ | \ | 0 | 1 | 0 | 0 | |
| 18 | The foregoing ones excepted | | | | | | | | 0 | 0 | 0 | 0 | |

where

$A_0=Q_0\times\overline{Q}_1$, $A_1=Q_2$, $A_2=Q_3$, $A_3=Q_4$, $A_4=Q_5$, $A_5=Q_6$, $A_6=Q_7$ and $A_7=Q_8+Q_9$ hold

Portions with diagonal have any logics.

It will be understood through that operation, that the pattern (11010001) of the original data shown in Figure 4(a) is converted to a code pattern (1000001001100010) shown in Figure 4(e) as in the embodiment of Figure 2.

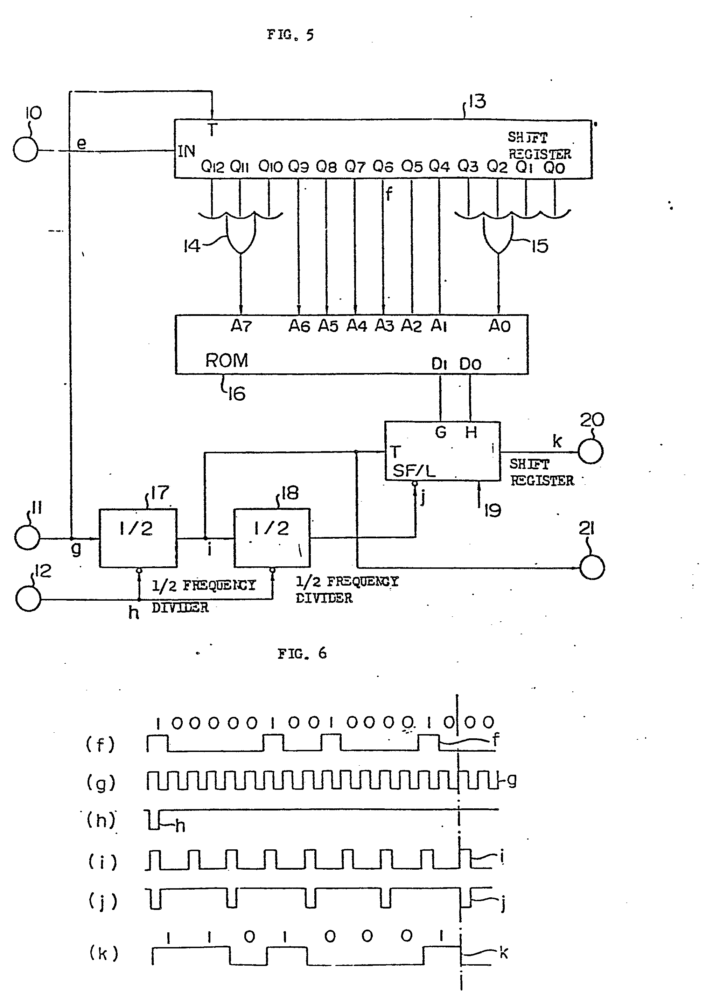

Then Figure 5 shows a block diagram of one embodiment to which a decoding system according to the present invention is applied and Figure 6 shows a timing chart for explaining the operation thereof. First a converted code sequence (Figure 4(e)) is entered into an input terminal (10) and a clock signal g (Figure 6(g)) synchronized therewith is entered into an input terminal (11). Then as during the encoding, the clock signal g is frequency divided into a signal i with a frequency divided by 2 (Figure 6(i)) and a signal j with a frequency divided by 4 (Figure 6(j)) by 1/2 frequency dividers (17) and (18) respectively. Also the entered converted code sequence is delayed one bit at a time within a shift register (parallel in-serial out) (13) with the clock signal g applied to a terminal (T) and delivered through the output terminals ($Q_{12}$ to $Q_0$). (Assuming that $Q_0$ designates that output terminal through which a signal largest in delay is delivered, the delay is rendered small in the order of $Q_1$, $Q_{12}$.) It is now assumed that a signal A shown in Figure 4(f) is being delivered to the output terminal ($Q_6$). On the other hand, signals at the output terminals ($Q_0$ to $Q_3$) are made into the logical sum by a logical sum (OR) gate (15) after which it is entered into an input terminal ($A_0$) to an ROM (SN 74S471 of TI firm or the like). Also the signals at the output terminals ($Q_4$ to $Q_9$) are entered

into the input terminals ($A_1$ to $A_6$) while the signals at the output terminals ($Q_{10}$ to $Q_{12}$) are made into the logical sum by a logic sum (OR) gate (14). Thereafter it entered into the input terminal ($A_7$). The ROM (16) has a decoding conversion algorithm shown in the undermentioned Tenth or Eleventh Tables:

10TH TABLE
Table (1) of decoding algorithm of converting ROM of novel encoding system

| Input address | | | | | | | | Output pattern | |
|---|---|---|---|---|---|---|---|---|---|
| $A_0$ | $A_1$ | $A_2$ | $A_3$ | $A_4$ | $A_5$ | $A_6$ | $A_7$ | $D_0$ | $D_1$ |
| | | | 1 | 0 | 0 | 0 | | 1 | 1 |
| | | | 0 | 0 | 1 | 0 | | 0 | 1 |
| | | | 0 | 0 | 0 | 0 | 0 | 1 | 0 |
| | | | 0 | 1 | 0 | 0 | 0 | 1 | 0 |
| | | | | 0 | 0 | 1 | | 1 | 0 |
| | 1 | 0 | 0 | 0 | 0 | 0 | 1 | 1 | 1 |
| 1 | 0 | 1 | 0 | 0 | 0 | 0 | 1 | 1 | 1 |
| All addresses except for the foregoing ones | | | | | | | | 0 | 0 |

The decoding algorithm of the Tenth Table is used upon decoding the code sequence converted by the embodiment of Figure 2 and has an algorithm by which a decoding 4-bit codes (specified by the addresses $A_3$ to $A_6$) for the converted code sequence are decoded into the original 2-bit data in accordance with the conditions for a preceding and a succeeding code pattern (specified by the addresses $A_0$, $A_1$, $A_2$ and $A_7$). A decoded pattern is delivered to output terminals ($D_0$ and $D_1$). This decoding algorithm of the converting ROM changes the output pattern through an algorithm of a preceding and a succeeding pattern (specified by the address $A_0$, $A_1$, $A_2$, or $A_7$) only for two specified types, of address patterns "$A_3$ to $A_6$"="0000" and ="0100" among the 4-bit codes to be converted (specified by the addresses $A_3$ to $A_6$). A decoded output signal is entered into a shift register (parallel in-serial out) (19) at presetting terminals (G to H). On the other hand, the 1/2 frequency dividers (17) and (18) are put in synchronization with each other with a synchronizing signal h (entered into an input terminal (12) and shown in Figure 6(h)) and generate a signal i with a frequency divided by 2 (Figure 6(i)) and a signal j with a frequency divided by 4 (Figure 6(j)) respectively. The shift register (19) latches presetting input signals thereto that is, signals at input terminals (H and G) with the timing signal j applied to its terminal (SF/L) and also delivers to an output terminal (2) data k (Figure 6(k)) decoded with the demodulating clock signal i applied to its terminal (T). The decoding clock signal i is delivered to a clock output terminal (20). By viewing this status in the timing chart of Figure 6, it will be understood that a pattern (1000001001000010) of the entered converted code sequence (=f) is decoded as decoded data k (11010001).

11TH TABLE
Table (2) of decoding algorithm of converting ROM of novel encoding system

| Input address | | | | | | | | Output pattern | |
|---|---|---|---|---|---|---|---|---|---|
| $A_0$ | $A_1$ | $A_2$ | $A_3$ | $A_4$ | $A_5$ | $A_6$ | $A_7$ | $D_0$ | $D_1$ |
| | | | 1 | 0 | 0 | 0 | | 1 | 1 |
| 1 | 0 | 1 | 0 | 0 | 0 | 0 | 1 | 1 | 1 |
| | 1 | 0 | 0 | 0 | 0 | 0 | 1 | 1 | 1 |
| | | | 0 | 0 | 1 | 0 | | 0 | 1 |
| | | | 0 | 1 | 0 | 0 | 0 | 1 | 0 |
| 1 | 0 | 0 | 0 | 0 | 0 | 1 | 0 | 1 | 0 |
| | 0 | 1 | 0 | 0 | 0 | 0 | 0 | 1 | 0 |
| | | | 1 | 0 | 0 | 1 | | 1 | 0 |
| | 0 | 1 | 0 | 0 | 0 | 1 | | 1 | 0 |
| | 1 | 0 | 0 | 0 | 0 | 1 | | 1 | 0 |
| The foregoing ones excepted | | | | | | | | 0 | 0 |

The decoding algorithm of the Eleventh Table is used in decoding the code sequence converted by the embodiment of Figure 3 and has an algorithm by which decoding 4-bit codes (specified by the addresses $A_3$ to $A_6$) are decoded into the original 2-bit data in accordance with the conditions for a preceding and a succeeding code pattern (specified by the addresses $A_0$, $A_1$, $A_2$ and $A_7$). A decoded pattern is delivered to the output terminals ($D_0$ and $D_1$). This decoding algorithm of the converting ROM changes the output patterns through an algorithm of a preceding and a succeeding pattern (specified by the address $A_0$, $A_1$, $A_2$ or $A_7$) only for three specified types of the address patterns "$A_3$ to $A_6$"="0000", ="0100" and "0001" among the 4-bit codes to be decoded (specified by the addresses $A_3$ to $A_6$). By viewing this status in the timing chart of Figure 6, it will be understood that, as during the decoding by the embodiment of Figure 2, a pattern (1000001001000010) of the entered decoded code sequence (=f) is decoded as decoded data k (11010001).

Further the Third and Fourth Tables for the encoding algorithms used for the purpose of describing the present invention are one concrete example of the present invention and the Seventh and Eighth Tables are other concrete examples of the present invention. Still another encoding algorithm may be used. That is, it is evident that in the encoding system, first, combinations of the original data patterns with the converted codes in the Third and Fourth Tables as well as in the Seventh and Eighth Tables are possible to be any combination of four types of patterns formed of two bits as four types of patterns shown by the original data. Also the logical algorithm and conditions of the converted codes reverse in order with respect to all the data. That is, for example, a converted code (Y001) is changed to (100Z) and $(E_2E_1) \rightarrow (L_1L_2)$, $(L_1L_2) \rightarrow (E_2E_1)$, $(L_3L_4) \rightarrow (E_4E_3)$ and $(E_4E_3) \rightarrow (L_3L_4)$ are effected. However Z at that time makes a complement logic of two bit immediately after the code bit Z in the converted code sequence. It is evident that the encoding system of the present invention may be formed of such an encoding method. Also even if the encoding patterns of the Third and Seventh Tables are partly revised and changed as in the Fourth and Eighth Tables, there may be composed a similar encoding system having the ability to hold d=2, k=8 and k=7 as predetermined.

Industrial applicability

As described above, the encoding and decoding systems of the present invention have the excellent ability, as a high density magnetic recording system, as compared with conventional other modulation systems such as in the Second Table, and a construction of the hardware is much simplified. Thus its practical merit is very large.

**Claims**

1. A binary data encoding system dividing a binary data sequence at intervals of two bits and converting said divided 2-bit data to codes each consisting of four bits, characterised in that data are sensed within a range of six bits immediately preceding the 2-bit data and also within a range of six bits immediately succeeding thereto, said data thus sensed are, in combination with the complement (Y, Z) of the logical sum of either the last two code bits of the preceding 4-bit code or the first two code bits of the succeeding 4-bit code, utilized to convert said 2-bit data to said 4-bit codes in such a way that no less than two to not more than eight "0" code bits are caused to exist between any code bit "1" of said converted code sequence and a code bit "1" next developed therein.

2. A binary data encoding system according to claim 1 characterised in that the four bits immediately preceding the 2-bit data and also the four bits immediately succeeding thereto are sensed.

3. A binary data encoding system according to claim 2 characterised in that the two bits immediately preceding the 2-bit data and the four bits immediately succeeding thereto are sensed and said 2-bit data are converted to the 4-bit data by using the algorithm of the following conversion Table S1:

CONVERSION TABLE S1

| Original data | Converted code | Conditions |
|---|---|---|
| A | Y000 | |
| B | 0010 | |
| C | 0100 | "$E_2E_1$" "C" and "$L_1L_2$"="D' |
| C | 0001 | "$E_2E_1$"="C" and "$L_1L_2$"="D" |
| C | 0000 | "$E_2E_1$"="C", "$L_1L_2$"="C" and "$L_3L_4$"="D" |
| C | 0100 | "$E_2E_1$" "C", "$L_1L_2$"="C" and "$L_3L_4$"="D" |
| C | Y001 | All cases except the foregoing ones |
| D | 0000 | "$E_2E_1$"="C" |
| D | 0100 | All cases except the foregoing ones |

where

A to D: four types of patterns formed of 2-bit data where A="11", B="01", C="10" and D="00"

Y: complement of logical sum of the two bits immediately before code bit Y in the converted code sequence

| Y | Two bits immediately before code bit Y |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence

4. A binary data encoding system according to claim 2 characterised in that the four bits immediately preceding the 2-bit data and also the four bits immediately succeeding thereto are sensed and said 2-bit data are converted to the 4-bit data by using the algorithm of the following Conversion Tables S2:

CONVERSION TABLE S2

| Original data | Converted code | Conditions |
|---|---|---|
| A | Y000 | |
| B | 0010 | |
| C | 0100 | "$E_2E_1$" "C" and "$L_1L_2$"="D" |
| C | 0001 | "$E_2E_1$"="C" and "$L_1L_2$"="D" |
| C | 0000 | "$E_2E_1$"="C", "$L_1L_2$"="C" and "$L_3L_4$"="D" |
| C | 0100 | "$E_2E_1$" "C", "$L_1L_2$"="C" and "$L_3L_4$"="D" |
| C | Y001 | All cases except the foregoing ones |
| D | 0000 | "$E_2E_1$"="C" and "$E_4E_3$"≠"C" |
| D | 0010 | "$E_2E_1$"="C" and "$E_4E_3$"="C" |
| D | 0100 | All cases except the foregoing ones |

where

A to D: four types of patterns, formed of 2-bit data where A="11", B="01", C="10" and D="00"

Y: complement of logical sum of the two bits immediately before code bit Y in converted code sequence

| Y | Two bits immediately before code bit Y |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence.

5. A binary data encoding system according to claim 2 characterised in that the four bits immediately preceding the 2-bit data and also the two bits immediately succeeding thereto are sensed and said 2-bit data are converted to the 4-bit data by using the algorithm of the following Conversion Table S3.

CONVERSION TABLE S3

| Original data | Converted code | Conditions |
|---|---|---|
| A | 000Z | |
| B | 0100 | |
| C | 0010 | "$E_2E_1$"="D" and "$L_1L_2$" "D" |
| C | 1000 | "$E_2E_1$"="D" and "$L_1L_2$"="C" |
| C | 0000 | "$E_2E_1$"="C", "$E_4E_3$"="D" and "$L_1L_2$"="C" |
| C | 0010 | "$E_2E_1$"="C", "$E_4E_3$"="C" and "$L_1L_2$" "C" |
| C | 100Z | All cases except the foregoing ones |
| D | 0000 | "$L_1L_2$"="C" |
| D | 0010 | All cases except the foregoing ones |

where

A to D: four types of patterns formed of 2-bit data and shown, for example, by A="11", B="01", C="10" and D="00"

Z: complement of logical sum of the two bits immediately after code bit "Z" in converted sequence

| Z | Two bits immediately after code bit Z |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence.

6. A binary data encoding system according to claim 2 characterised in that the four bits immediately preceding the 2-bit data and also the four bits immediately succeeding thereto are sensed and said 2-bit data are converted to the 4-bit data by using the algorithm of the following Conversion Table S4:

CONVERSION TABLE S4

| Original data | Converted code | Conditions |
|---|---|---|
| A | 000Z | |
| B | 0100 | |
| C | 0010 | "$E_2E_1$"="D" and "$L_1L_2$" "C" |
| C | 1000 | "$E_2E_1$"="D" and "$L_1L_2$"="C" |
| C | 0000 | "$E_2E_1$"="C", "$E_4E_3$"="D" and "$L_1L_2$"="C" |
| C | 0010 | "$E_2E_1$"="C", "$E_4E_3$"="D" and "$L_1L_2$" "C" |
| C | 100Z | All cases except the foregoing ones |
| D | 0000 | "$L_1L_2$"="C" and "$L_3L_4$" "C" |
| D | 0100 | "$L_1L_2$"="C" and "$L_3L_4$"="C" |
| D | 0010 | All cases except the foregoing ones |

where

A to D: four types of patterns formed of 2-bit data and shown, for example, by A="11", B="01", C="10" and D="0"

Z: complement of logical sum of the two bits immediately after code bit "Z" in converted sequence

| Z | Two bits immediately after code bit Z |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence.

7. A binary data encoding system according to claim 1 characterised in that from not fewer than two not more than seven of code bits "0" are caused to exist between any code bit "1" in the converted code sequence and a code bit "1" next developed therein.

8. A binary data encoding system according to claim 7 characterised in that the four bits immediately preceding the 2-bit data and also the four bits immediately succeeding thereto are sensed and said 2-bit data are converted to the 4-bit data by using the algorithm of the following Conversion Table S5:

CONVERSION TABLE S5

| Original data | Converted code | Conditions |
|---|---|---|
| A | Y000 | |
| B | 0010 | |
| C | 0100 | "$E_2E_1$" "C" and "$L_1L_2$"="D" |
| C | 0001 | "$E_2E_1$"="C" and "$L_1L_2$"="D" |
| C | 0000 | "$E_2E_1$"="C", "$L_1L_2$"="C" and "$L_3L_4$"="D" |
| C | 0100 | "$E_2E_1$" "C", "$L_1L_2$"="C" and "$L_3L_4$"="D" |
| C | Y001 | All cases except for the foregoing ones |
| D | 0000 | "$E_4E_3$" "C", "$E_2E_1$"="C" and "$L_1L_2$" "B" |
| D | 0001 | "$E_4E_3$" "C", "$E_2E_1$"="C" and "$L_1L_2$"="B" |
| D | 0000 | "$E_4E_3$"="C" and "$E_2E_1$"="C" |
| D | 0100 | All cases except for the foregoing ones |

where

A to D: four types of patterns, formed of 2-bit data where A="11", B="01", C="10" and D="00"

Y: complement of logical sum of the two bits immediately before code bit Y in converted code sequence

| Y | Two bits immediately before code bit Y |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence.

9. A binary data encoding system according to claim 7 characterised in that the six bits immediately preceding the 2-bit data and also the four bits immediately succeeding thereto are sensed and said 2-bit data are converted to the 4-bit data by using the algorithm of the following Conversion Table S6:

CONVERSION TABLE S6

| Original data | Converted code | Conditions |
|---|---|---|
| A | Y000 | |
| B | 0000 | "$E_6E_5$" "C", "$E_4E_3$"="C" and "$E_2E_1$"="D" |
| B | 0010 | All cases except the foregoing ones |
| C | 0100 | "$E_2E_1$" "C" and "$L_1L_2$"="D" |
| C | 0001 | "$E_2E_1$"="C" and "$L_1L_2$"="D" |
| C | 0000 | "$E_2E_1$"="C", "$L_1L_2$"="C" and "$L_3L_4$"="D" |
| C | 0100 | "$E_2E_1$" "C", "$L_1L_2$"="C" and "$L_3L_4$"="D" |
| C | Y001 | All cases except the foregoing ones |
| D | 0000 | "$E_4E_3$" "C", "$E_2E_1$"="C" and "$L_1L_2$" "B" |
| D | 0001 | "$E_4E_3$" "C", "$E_2E_1$"="C" and "$L_1L_2$"="B" |
| D | 0010 | "$E_4E_3$"="C" and "$E_2E_1$"="C" |
| D | 0100 | All cases except the foregoing ones |

where

A to D: four types of patterns, formed of 2-bit data where A="11", B="01", C="10" and D="00"

Y: complement of logical sum of the two bits immediately before code bit Y in converted code sequence

| Y | Two bits immediately before code bit Y |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence.

10. A binary data encoding system according to claim 7 characterised in that the four bits immediately preceding the 2-bit data and also the four bits immediately succeeding thereto are sensed and said 2-bit data are converted to the 4-bit codes by using the algorithm of the following Conversion Table S7:

CONVERSION TABLE S7

| Original data | Converted code | Conditions |
|---|---|---|
| A | 000Z | |
| B | 0100 | |
| C | 0010 | "$L_1L_2$" "C" and "$E_1E_2$"="D" |
| C | 1000 | "$L_1L_2$"="C" and "$E_2E_1$"="D" |
| C | 0000 | "$L_1L_2$"="C", "$E_2E_1$"="C" and "$L_4L_3$"="D" |
| C | 0010 | "$L_1L_2$" "C", "$E_2E_1$"="C" and "$E_4E_3$"="D" |
| C | 100Z | All cases except the foregoing ones |
| D | 0000 | "$L_3L_4$" "C", "$L_1L_2$"="C" and "$E_2E_1$" "B" |
| D | 1000 | "$L_4L_3$" "C", "$L_1L_2$"="C" and "$L_1L_2$"="B" |
| D | 0000 | "$L_3L_4$"="C" and "$L_1L_2$"="C" |
| D | 0010 | All cases except the foregoing ones |

where

A to D: four types of patterns, formed of 2-bit data where A="11", B="01", C="10" and D="00"

Z: complement of logical sum of the two bits immediately before code bit "Z" in converted code sequence

| Z | Two bits immediately after code bit Z |
|---|---|
| 1 | "00" |
| 0 | All cases except for "00" |

and

$E_n$: data bit preceding, by n-bits, 2-bit data to be converted in original data sequence

$L_n$: data bit succeeding, by n-bits, 2-bit data to be converted in original data sequence.

11. A binary data encoding system according to claim 7 characterised in that the four bits immediately preceding the 2-bit data and also the six bits immediately succeeding thereto are sensed and said 2-bit data are converted to the 4-bit codes by using the algorithm of the following Conversion Table S8:

CONVERSION TABLE S8

| Original data | Converted code | Conditions |
|---|---|---|
| A | 000Z | |
| B | 0000 | "$L_5L_6$" "C", "$L_3L_4$"="C" and "$L_1L_2$"="D" |
| B | 0100 | All cases except the foregoing ones |
| C | 0010 | "$L_1L_2$" "C" and "$E_2E_1$"="D" |
| C | 1000 | "$L_1L_2$"="C" and "$E_2E_1$"="D" |
| C | 0000 | "$L_1L_2$"="C", "$E_2E_1$"="C" and "$E_4E_3$"="D" |
| C | 0010 | "$L_1L_2$" "C", "$E_2E_1$"="C" and "$E_4E_3$"="D" |
| C | 100Z | All cases except the foregoing ones |
| D | 0000 | "$L_3L_4$" "C", "$L_1L_2$"="C" and "$E_2E_1$" "B" |
| D | 1000 | "$L_3L_4$" "C", "$L_1L_2$"="C" and "$E_2E_1$"="B" |
| D | 0100 | "$L_3L_4$"="C" and "$L_1L_2$"="C" |
| D | 0010 | All cases except the foregoing ones |

where

A to D: four types of patterns formed of 2-bit data and shown, for example, by A="11", B="01", C="10" and D="00"

Z: complement of logical sum of the two bits immediately after code bit "Z" in converted sequence

| Z | Two bits immediately after code bit Z |
|---|---|
| 1 | "00" |
| 0 | All cases except for "00" |

and

$E_n$: data bit preceding, by n-bits, the 2-bit data to be converted in original data sequence

$L_n$: data bit succeeding, by n-bits, the 2-bit data to be converted in original data sequence.

12. A binary data decoding system characterised in that, upon dividing the code sequence converted in accordance with the binary data encoding system according to any of claims 2 to 6, at intervals of four bits, and upon decoding and converting said divided 4-bits codes into data codes each formed of two bits according to a predetermined decoding algorithm, relating each possible 4-bit code pattern to a 2-bit data pattern, when code patterns formed of said 4-bit codes are identical with one of two predetermined pattern types (0000, 0100) up to three code bits immediately preceding and succeeding the said 4-bit codes are sensed and said sensed code bits are utilized to change the decoding algorithm for decoding said 4-bit data into said 2-bit data codes.

13. A binary data decoding system characterised in that, upon dividing the code sequence converted in accordance with the binary data encoding system according to any of claims 7 to 11 at intervals of four bits and upon decoding and converting said divided 4-bit codes into data codes each formed of two bits, according to a predetermined decoding algorithm, relating each possible 4-bit code pattern to a 2-bit data pattern, when code patterns formed of said 4-bit codes are identical with one of three predetermined pattern types (0000, 0100, 0001) up to three code bits immediately preceding and succeeding the said 4-bit code are sensed, said sensed code bits are utilized to change the decoding algorithm for decoding said bit codes into said 2-bit data codes.

**Patentansprüche**

1. Binäres Datencodiersystem, bei dem eine binäre Datenfolge in Intervallen von zwei Bits geteilt und die geteilten 2-Bit-Daten in Codes umgewandelt werden, die jeweils aus vier Bits bestehen, dadurch gekennzeichnet, daß die Daten in einem Bereich von sechs Bits, die den 2-Bit-Daten unmittelbar vorhergehen, und außerdem in einem Bereich von sechs Bits, die unmittelbar folgen, abgetastet werden, und daß die so abgetasteten Daten in Kombination mit dem Komplement (Y, Z) der logischen Summe von entweder den letzten zwei Code-Bits des vorhergehenden 4-Bit-Code oder den ersten beiden Code-Bits des folgenden 4-Bit-Code verwendet werden, um die 2-Bit-Daten in der Weise in die 4-Bit-Codes umzuwandeln, daß nicht weniger als zwei bis nicht mehr als acht "0" Code-Bits zwischen jedem Code-Bit "1" der umgewandelten Code-Folge und dem nächsten darin gebildeten Code-Bit "1" vorhanden sind.

2. Binäres Datencodiersystem nach Anspruch 1, dadurch gekennzeichnet, daß die vier Bits, die den 2-Bit-Daten unmittelbar vorhergehen, und auch die vier Bits, die unmittelbar folgen, abgetastet werden.

3. Binäres Datencodiersystem nach Anspruch 2, dadurch gekennzeichnet, daß die beiden Bits, die den 2-Bit-Daten unmittelbar vorhergehen, und die vier Bits, die unmittelbar darauf folgen, abgetastet werden und daß die 2-Bit-Daten in die 4-Bit-Daten umgewandelt werden, indem man den Algorithmus der folgenden Umwandlungstabelle S1 verwendet:

UMWANDLUNGSTABELLE S1

| Original-daten | umgewandel-ter Code | Bedingungen |
|---|---|---|
| A | Y000 | |
| B | 0010 | |
| C | 0100 | "$E_2E_1$"≠"C" und "$L_1L_2$"="D" |
| C | 0001 | "$E_2E_1$"="C" und "$L_1L_2$"="D" |
| C | 0000 | "$E_2E_1$"="C", "$L_1L_2$"="C" und "$L_3L_4$"="D" |
| C | 0100 | "$E_2E_1$"≠"C", "$L_1L_2$"="C" und "$L_3L_4$"="D" |
| C | Y001 | alle Fälle ausgenommen die vorigen |
| D | 0000 | "$E_2E_1$"="C" |
| D | 0100 | alle Fälle ausgenommen die vorigen |

wobei

A bis D: vier Typen von Mustern, die aus 2-Bit-Daten gebildet sind, wobei A="11", B="01", C="10" und D="00",

Y: Komplement der logischen Summe der beiden Bits unmittelbar vor dem Code-Bit Y in der umgewandelten Code-Folge

| Y | Zwei Bits unmittelbar vor Code-Bit Y |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

4. Binäres Datencodiersystem nach Anspruch 2, dadurch gekennzeichnet, daß die vier Bits, die den 2-Bit-Daten unmittelbar vorhergehen, und auch die vier Bits, die ihnen unmittelbar folgen, abgetastet werden und daß die 2-Bit-Daten in die 4-Bit-Daten umgewandelt werden, indem man den Algorithmus der folgenden Umwandlungstabelle S2 verwendet:

UMWANDLUNGSTABELLE S2

| Originaldaten | umgewandelter Code | Bedingungen |
|---|---|---|
| A | Y000 | |
| B | 0010 | |
| C | 0100 | "$E_2E_1$"≠"C" und "$L_1L_2$"="D" |
| C | 0001 | "$E_2E_1$"="C" und "$L_1L_2$"="D" |
| C | 0000 | "$E_2E_1$"="C", "$L_1L_2$"="C" und "$L_3L_4$"="D" |
| C | 0100 | "$E_2E_1$"≠"C", "$L_1L_2$"="C" und "$L_3L_4$"="D" |
| C | Y001 | alle Fälle ausgenommen die vorigen |
| D | 0000 | "$E_2E_1$"="C" und "$E_4E_3$"≠"C" |
| D | 0010 | "$E_2E_1$"="C" und "$E_4E_3$"="C" |
| D | 0100 | alle Fälle ausgenommen die vorigen |

wobei

A bis D: vier Typen von Mustern, die von 2-Bit-Daten gebildet werden, wobei A="11", B="01", C="10" und D="00",

Y: Komplement der logischen Summe der beiden Bits unmittelbar vor dem Code-Bit Y in der umgewandelten Code-Folge

| Y | zwei Bits unmittelbar vor dem Code-Bit Y |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

5. Binäres Datencodiersystem nach Anspruch 2, dadurch gekennzeichnet, daß die vier Bits, die den 2-Bit-Daten unmittelbar vorhergehen, und auch die zwei Bits, die ihnen unmittelbar folgen, abgetastet werden und daß die 2-Bit-Daten in die 4-Bit-Daten umgewandelt werden, indem man den Algorithmus gemäß der folgenden Umwandlungstabelle S3 verwendet:

UMWANDLUNGSTABELLE S3

| Original-daten | umgewandel-ter Code | Bedingungen |
|---|---|---|
| A | 000Z | |
| B | 0100 | |
| C | 0010 | "$E_2E_1$"="D" und "$L_1L_2$"≠"D" |
| C | 1000 | "$E_2E_1$"="D" und "$L_1L_2$"="C" |
| C | 0000 | "$E_2E_1$"="C", "$E_4E_3$"="D" und "$L_1L_2$"="C" |
| C | 0010 | "$E_2E_1$"="C", "$E_4E_3$"="C" und "$L_1L_2$"≠"C" |
| C | 100Z | alle Fälle ausgenommen die vorigen |
| D | 0000 | "$L_1L_2$"="C" |
| D | 0010 | alle Fälle ausgenommen die vorigen |

wobei

A bis D: vier Typen von Mustern, die aus 2-Bit-Daten gebildet sind und beispielsweise gegeben sind durch A="11", B="01", C="10" und D="00",

Z: Komplement der logischen Summe der beiden Bits unmittelbar nach dem Code-Bit "Z" in der umgewandelten Folge,

| Z | zwei Bits unmittelbar nach dem Code-Bit Z |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

6. Binäres Datencodiersystem nach Anspruch 2, dadurch gekennzeichnet, daß die vier Bits, die den 2-Bit-Daten unmittelbar vorhergehen, und auch die vier Bits, die ihnen unmittelbar folgen, abgetastet werden, und daß die 2-Bit-Daten in die 4-Bit-Daten umgewandelt werden, indem man den Algorithmus gemäß der nachstehenden Umwandlungstabelle S4 verwendet.

UMWANDLUNGSTABELLE S4

| Original-daten | umgewandel-ter Code | Bedingungen |
|---|---|---|
| A | 000Z | |
| B | 0100 | |
| C | 0010 | "$E_2E_1$"="D" und "$L_1L_2$"≠"C" |
| C | 1000 | "$E_2E_1$"="D" und "$L_1L_2$"="C" |
| C | 0000 | "$E_2E_1$"="C", "$E_4E_3$"="D" und "$L_1L_2$"="C" |
| C | 0010 | "$E_2E_1$"="C", "$E_4E_3$"="D" und "$L_1L_2$"≠"C" |
| C | 100Z | alle Fälle ausgenommen die vorigen |
| D | 0000 | "$L_1L_2$"="C" und "$L_3L_4$"≠"C" |
| D | 0100 | "$L_1L_2$"="C" und "$L_3L_4$"="C" |
| D | 0010 | alle Fälle ausgenommen die vorigen |

wobei

A bis D: vier Typen von Mustern, die aus 2-Bit-Daten gebildet sind und beispielsweise gegeben sind durch A="11", B="01", C="10" und D="00",

Z: Komplement der logischen Summe der beiden Bits unmittelbar nach dem Code-Bit "Z" in der umgewandelten Folge

| Z | Zweit Bits unmittelbar nach dem Code-Bit Z |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

7. Binäres Datencodiersystem nach Anspruch 1, dadurch gekennzeichnet, daß nicht weniger als zwei bis nicht mehr als sieben Code-Bits "0" zwischen jedem Code-Bit "1" in der umgewandelten Code-Folge und dem nächsten darin gebildeten Code-Bit "1" vorhanden sind.

8. Binäres Datencodiersystem nach Anspruch 7, dadurch gekennzeichnet, daß die vier Bits, die den 2-Bit-Daten unmittelbar vorhergehen, und auch die vier Bits, die ihnen unmittelbar folgen, abgetastet werden, und daß die 2-Bit-Daten in die 4-Bit-Daten umgewandelt werden, indem man den Algorithmus gemäß der folgenden Umwandlungstabelle S5 verwendet:

UMWANDLUNGSTABELLE S5

| Original-daten | umgewandel-ter Code | Bedingungen |
|---|---|---|
| A | Y000 | |
| B | 0010 | |
| C | 0100 | "$E_2E_1$"≠"C" und "$L_1L_2$"="D" |
| C | 0001 | "$E_2E_1$"="C" und "$L_1L_2$"="D" |
| C | 0000 | "$E_2E_1$"="C", "$L_1L_2$"="C" und "$L_3L_4$"="D" |
| C | 0100 | "$E_2E_1$"≠"C", "$L_1L_2$"="C" und "$L_3L_4$"="D" |
| C | Y001 | alle Fälle ausgenommen die vorigen |
| D | 0000 | "$E_4E_3$"≠"C", "$E_2E_1$"="C" und "$L_1L_2$"≠"B" |
| D | 0001 | "$E_4E_3$"≠"C", "$E_2E_1$"="C" und "$L_1L_2$"="B" |
| D | 0000 | "$E_4E_3$"="C" und "$E_2E_1$"="C" |
| D | 0100 | alle Fälle ausgenommen die vorigen |

wobei

A bis D: vier Typen von Mustern, die aus 2-Bit-Daten gebildet sind, wobei A="11", B="01", C="10" und D="00",

Y: Komplement der logischen Summe der beiden Bits unmittelbar vor dem Code-Bit Y in der umgewandelten Code-Folge,

| Y | zwei Bits unmittelbar vor dem Code-Bit Y |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

9. Binäres Datencodiersystem nach Anspruch 7, dadurch gekennzeichnet, daß die sechs Bits, die den 2-Bit-Daten unmittelbar vorhergehen, und auch die vier Bits, die ihnen unmittelbar folgen, abgetastet werden, und daß die 2-Bit-Daten in die 4-Bit-Daten umgewandelt werden, indem man den Algorithmus gemäß der nachstehenden Umwandlungstabelle S6 verwendet.

UMWANDLUNGSTABELLE S6

| Original-daten | umgewandel-ter Code | Bedingungen |
|---|---|---|
| A | Y000 | |
| B | 0000 | "$E_6E_5$"≠"C", "$E_4E_3$"="C" und "$E_2E_1$"="D" |
| B | 0010 | alle Fälle ausgenommen die vorigen |
| C | 0100 | "$E_2E_1$"≠"C" und "$L_1L_2$"="D" |
| C | 0001 | "$E_2E_1$"="C" und "$L_1L_2$"="D" |
| C | 0000 | "$E_2E_1$"="C", "$L_1L_2$"="C" und "$L_3L_4$"="D" |
| C | 0100 | "$E_2E_1$"≠"C", "$L_1L_2$"="C" und "$L_3L_4$"="D" |
| C | Y001 | alle Fälle ausgenommen die vorigen |
| D | 0000 | "$E_4E_3$"≠"C", "$E_2E_1$"="C" und "$L_1L_2$"≠"B" |
| D | 0001 | "$E_4E_3$"≠"C", "$E_2E_1$"="C" und "$L_1L_2$"="B" |
| D | 0010 | "$E_4E_3$"="C" und "$E_2E_1$"="C" |
| D | 0100 | alle Fälle ausgenommen die vorigen |

wobei

A bis D: vier Typen von Mustern, die von 2-Bit-Daten gebildet werden, wobei A="11", B="01", C="10" und D="00",

Y: Komplement der logischen Summe der beiden Bits unmittelbar vor dem Code-Bit Y in der umgewandelten Code-Folge

| Y | zwei Bits unmittelbar vor dem Code-Bit Y |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

10. Binäres Datencodiersystem nach Anspruch 7, dadurch gekennzeichnet, daß die vier Bits, die den 2-Bit-Daten unmittelbar vorhergehen, und auch die vier Bits, die ihnen unmittelbar folgen, abgetastet werden, und daß die 2-Bit-Daten in die 4-Bit-Daten umgewandelt werden, indem man den Algorithmus gemäß der nachstehenden Umwandlungstabelle S7 verwendet:

UMWANDLUNGSTABELLE S7

| Original-daten | umgewandel-ter Code | Bedingungen |
|---|---|---|
| A | 000Z | |
| B | 0100 | |
| C | 0010 | "$L_1L_2$"≠"C" und "$E_1E_2$"="D" |
| C | 1000 | "$L_1L_2$"="C" und "$E_2E_1$"="D" |
| C | 0000 | "$L_1L_2$"="C", "$E_2E_1$"="C" und "$L_4L_3$"="D" |
| C | 0010 | "$L_1L_2$"≠"C", "$E_2E_1$"="C" und "$E_4E_3$"="D" |
| C | 100Z | alle Fälle ausgenommen die vorigen |
| D | 0000 | "$L_3L_4$"≠"C", "$L_1L_2$"="C" und "$E_2E_1$"≠"B" |
| D | 1000 | "$L_4L_3$"≠"C", "$L_1L_2$"="C" und "$L_1L_2$"="B" |
| D | 0000 | "$L_3L_4$"="C" und "$L_1L_2$"="C" |
| D | 0010 | alle Fälle ausgenommen die vorigen |

wobei

A bis D: vier Typen von Mustern, gebildet aus 2-Bit-Daten, wobei A="11", B="01", C="10" und D="00",

Z: Komplement der logischen Summe der beiden Bits unmittelbar nach dem Code-Bit "Z" in der umgewandelten Folge,

| Z | Zwei Bits unmittelbar nach dem Code-Bit Z |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

11. Binäres Datencodiersystem nach Anspruch 7, dadurch gekennzeichnet, daß die vier Bits, die den 2-Bit-Daten unmittelbar vorhergehen, und auch die sechs Bits, die ihnen unmittelbar folgen, abgetastet werden, und daß die 2-Bit-Daten in die 4-Bit-Daten umgewandelt werden, indem man den Algorithmus gemäß der nachstehenden Umwandlungstabelle S8 verwendet:

UMWANDLUNGSTABELLE S8

| Originaldaten | umgewandelter Code | Bedingungen |
|---|---|---|
| A | 000Z | |
| B | 0000 | "$L_5L_6$"≠"C", "$L_3L_4$"="C" und "$L_1L_2$"="D" |
| B | 0100 | alle Fälle ausgenommen die vorigen |
| C | 0010 | "$L_1L_2$"≠"C" und "$E_2E_1$"="D" |
| C | 1000 | "$L_1L_2$"="C" und "$E_2E_1$"="D" |
| C | 0000 | "$L_1L_2$"="C", "$E_2E_1$"="C" und "$E_4E_3$"="D" |
| C | 0010 | "$L_1L_2$"≠"C", "$E_2E_1$"="C" und "$E_4E_3$"="D" |
| C | 100Z | alle Fälle ausgenommen die vorigen |
| D | 0000 | "$L_3L_4$"≠"C", "$L_1L_2$"="C" und "$E_2E_1$"≠"B" |
| D | 1000 | "$L_3L_4$"≠"C", "$L_1L_2$"="C" und "$E_2E_1$"="B" |
| D | 0100 | "$L_3L_4$"="C" und "$L_1L_2$"="C" |
| D | 0010 | alle Fälle ausgenommen die vorigen |

wobei

A bis D: vier Typen von Mustern, die aus 2-Bit-Daten gebildet sind und beispielsweise gegeben sind durch A="11", B="01", C="10" und D="00",

Z: Komplement der logischen Summe der beiden Bits unmittelbar nach dem Code-Bit "Z" in der umgewandelten Folge

| Z | Zwei Bits unmittelbar nach dem Code-Bit Z |
|---|---|
| 1 | "00" |
| 0 | alle Fälle außer "00" |

und

$E_n$: Datenbit, das um n-Bits den 2-Bit-Daten vorhergeht, die in der Originaldatenfolge umzuwandeln sind,

$L_n$: Datenbit, das um n-Bits den 2-Bit-Daten folgt, die in der Originaldatenfolge umzuwandeln sind.

12. Binäres Datendecodiersystem, dadurch gekennzeichnet, daß beim Teilen der Code-Folge, die gemäß dem binären Datencodiersystem nach einem der Ansprüche 2 bis 6 in Intervallen von vier Bits umgewandelt ist, und beim Decodieren und Umwandeln der geteilten 4-Bit-Codes in Daten-Codes, die jeweils aus zwei Bits bestehen, gemäß einem vorgegebenen Decodier-Algorithmus, der jedes mögliche 4-Bit-Codemuster mit einem 2-Bit-Datenmuster in Beziehung setzt, dann, wenn die aus den 4-Bit-Codes gebildeten Codemuster mit einem von zwei vorgegebenen Mustertypen (0000, 0100) identisch sind, bis zu drei Code-Bits, die den 4-Bit-Codes unmittelbar vorhergehen und folgen, abgetastet werden, und daß die abgetasteten Code-Bits verwendet werden, um den Decodier-Algorithmus zu ändern, um die 4-Bit-Daten in die 2-Bit-Datencodes zu dekodieren.

13. Binäres Datendecodiersystem, dadurch gekennzeichnet, daß beim Teilen der Code-Folge, die gemäß dem binären Datencodiersystem nach einem der Ansprüche 7 bis 11 in Intervallen von vier Bits umgewandelt ist, und beim Decodieren und Umwandeln der geteilten 4-Bit-Codes in Daten-Codes, die jeweils aus zwei Bits bestehen, gemäß einem vorgegebenen Decodier-Algorithmus, der jedes mögliche 4-Bit-Codemuster mit einem 2-Bit-Datenmuster in Beziehung setzt, dann, wenn die aus den 4-Bit-Codes gebildeten Codemuster mit einem der drei vorgegebenen Mustertypen (0000, 0100, 0001) identisch sind, bis zu drei Code-Bits, die den 4-Bit-Codes unmittelbar vorhergehen und folgen, abgetastet werden, und daß

die abgetasteten Code-Bits verwendet werden, um den Decodier-Algorithmus zu ändern, um die Bit-Codes in die 2-Bit-Datencodes zu decodieren.

**Revendications**

1. Un système de codage de données binaires divisant une séquence de données binaires à des intervalles de deux bits et convertissant lesdites données de 2 bits divisées en des codes consistant chacun de quatre bits, caractérisé en ce que les données sont détectées dans une gamme de six bits immédiatement précédant les données de 2 bits et également dans une gamme de six bits immédiatement les succédant, lesdites données ainsi détectées sont, en combinaison avec le complément (Y, Z) de la somme logique de soit les deux derniers bits de code du code de 4 bits précédent ou les deux premiers bits de code du code de 4 bits succédant, utilisées pour convertir lesdites données de 2 bits en dits codes de 4 bits d'une telle manière que pas moins de deux et pas plus de huit bits de code "0" sont amenés à exister entre tout bit de code "1" de ladite séquence de code convertie et un bit de code "1" produit ensuite dans celle-ci.

2. Un système de codage de données binaires selon la revendication 1 caractérisé en ce que les quatre bits immédiatement précédant les données de 2 bits et également les quatre bits immédiatement les succédant sont détectés.

3. Un système de codage de données binaires selon la revendication 2 caractérisé en ce que les deux bits immédiatement précédant les données de 2 bits et les quatre bits immédiatement succédant celles-ci sont détectés et les données de 2 bits sont converties en données de 4 bits en utilisant l'algorithme du tableau de conversion suivant S1:

TABLEAU DE CONVERSION S1

| Données d'origine | Code converti | Conditions |
|---|---|---|
| A | Y000 | |
| B | 0010 | |
| C | 0100 | "$E_2E_1$"≠"C" et "$L_1L_2$"="D" |
| C | 0001 | "$E_2E_1$"="C" et "$L_1L_2$"="D" |
| C | 0000 | "$E_2E_1$"="C", "$L_1L_2$"="C" et "$L_3L_4$"="D" |
| C | 0100 | "$E_2E_1$"≠"C", "$L_1L_2$"="C" et "$L_3L_4$"="D" |
| C | Y001 | Tous les cas excepté les précédents |
| D | 0000 | "$E_2E_1$"="C" |
| D | 0100 | Tous les cas excepté les précédents |

où

A à D: quatre types de motifs formés de données de 2 bis où A="11" B: "01", C="10" et D="00"

Y: complément de la somme logique des deux bits immédiatement avant le bit de code Y dans la séquence de codes convertie

| Y | Deux bits immédiatement avant le bit de code Y |
|---|---|
| 1 | "00" |
| 0 | Tous les cas excepté pour "00" |

et

$E_n$: bit de données précédent, de n-bits, les données de 2 bits à convertir en séquence de données d'origine

$L_n$: bit de données succédant, de n-bits, les données de 2 bits à convertir en séquence de données d'origine.

4. Un système de codage de données binaires selon la revendication 2 caractérisé en ce que les quatre bits immédiatement précédant les données de 2 bits et également les quatre bits immédiatement succédant celles-ci sont détectés et en ce que les données de 2 bits sont converties en données de 4 bits en utilisant l'algorithme des tableaux de conversion suivants S2:

TABLEAU DE CONVERSION S2

| Données d'origine | Code converti | Conditions |
|---|---|---|
| A | Y000 | |
| B | 0010 | |
| C | 0100 | "$E_2E_1$"≠"C" et "$L_1L_2$"="D' |
| C | 0001 | "$E_2E_1$"="C" et "$L_1L_2$"="D" |
| C | 0000 | "$E_2E_1$"="C", "$L_1L_2$"="C" et "$L_3L_4$"="D" |
| C | 0100 | "$E_2E_1$"≠"C", "$L_1L_2$"="C" et "$L_3L_4$"="D" |
| C | Y001 | Tous les cas excepté les précédents |
| D | 0000 | "$E_2E_1$"="C" et "$E_4E_3$"≠"C" |
| D | 0010 | "$E_2E_1$"="C" et $E_4E_3$"="C" |
| D | 0100 | Tous les cas excepté les précédents |

où

A à D: quatre types de motifs, formés de données de de 2 bits où A="11", B="01", C="10" et D="00"

Y: complément de somme logique des deux bits immédiatement avant le bit de code Y dans la séquence de codes convertie

| Y | Deux bits immédiatement avant le bit de code Y |
|---|---|
| 1 | "00" |
| 0 | Tous les cas excepté pour "00" |

et

$E_n$: bit de données précédent, de n-bits, les données de 2 bits à convertir dans la séquence de données d'origine

$L_n$: bit de données succédant, de n-bits, la donnée de 2 bits à convertir dans la séquence de données d'origine.

5. Un système de codage de données binaires selon la revendication 2 caractérisé en ce que les quatre bits immédiatement précédant les données de 2 bits et également les deux bits immédiatement succédant celles-ci sont détectés et en ce que les données de 2 bits précitées sont converties en données de 4 bits en utilisant l'algorithme du tableau de conversion suivant S3.

TABLEAU DE CONVERSION S3

| Données d'origine | Code converti | Conditions |
|---|---|---|
| A | 000Z | |
| B | 0100 | |
| C | 0010 | "$E_2E_1$"="D" et "$L_1L_2$"≠"D" |
| C | 1000 | "$E_2E_1$"="D" et "$L_1L_2$"="C" |
| C | 0000 | "$E_2E_1$"="C", "$E_4E_3$"="D" et "$L_1L_2$"="C" |
| C | 0010 | "$E_2E_1$"="C", "$E_4E_3$"="C" et "$L_1L_2$"≠"C" |
| C | 100Z | Tous les cas excepté les précédents |
| D | 0000 | "$L_1L_2$"="C" |
| D | 0010 | Tous les cas excepté les précédents |

où

A à D: quatre types de motifs formés de données de 2 bits et représentés, par exemple, par A="11", B="01", C="10" et D="00"

Z: complément de la somme logique des deux bits immédiatement après le bit de code "Z" dans la séquence convertie

| Z | Deux bits immédiatement après le bit de code Z |
|---|---|
| 1 | "00" |
| 0 | Tous les cas excepté pour "00" |

et

$E_n$: bit de données précédent, de n-bits, les données de 2 bits à convertir dans la séquence des données d'origine

$L_n$: bit de données succédent, de n-bits, les données de 2 bits à convertir dans la séquence de données d'origine

6. Un système de codage de données binaires selon la revendication 2 caractérisé en ce que les quatre bits immédiatement précédant les données de 2 bits et également les quatre bits immédiatement succédant celles-ci sont détectés et en ce que lesdites données de 2 bits sont converties en données de 4 bits en utilisant l'algorithme de tabeleau de conversion suivant S4:

TABLEAU DE CONVERSION S4

| Données d'origine | Code converti | Conditions |
|---|---|---|
| A | 000Z | |
| B | 0100 | |
| C | 0010 | "$E_2E_1$"="D" et "$L_1L_2$"≠"C" |
| C | 1000 | "$E_2E_1$"="D" et "$L_1L_2$"="C" |
| C | 0000 | "$E_2E_1$"="C", "$E_4E_3$"="D" et "$L_1L_2$"="C" |
| C | 0010 | "$E_2E_1$"="C", "$E_4E_3$"="D" et "$L_1L_2$"≠"C" |
| C | 100Z | Tous les cas excepté les précédents |
| D | 0000 | "$L_1L_2$"="C" et "$L_3L_4$"≠"C" |
| D | 0100 | "$L_1L_2$"="C" et "$L_3L_4$"="C" |
| D | 0010 | Tous les cas excepté les précédents |

où

A à D: quatre types de motifs formés de données de 2 bits et représentés, par exemple, par A="11", B="01", C="10" et D="00"

Z: complément d'une somme logique des deux bits immédiatement après le bit de code "Z" dans la séquence convertie

| Z | Deux bits immédiatement après le bit de code Z |
|---|---|
| 1 | "00" |
| 0 | Tous les cas excepté pour "00" |

et

$E_n$: bit de données précédent, de n-bits, les données de 2 bits à convertir dans la séquence de données d'origine

$L_n$: bit de données succédant, de n-bits, les données de 2 bits à convertir dans la séquence des données d'origine.

7. Un système de codage de données binaires selon la revendication 1 caractérisé en ce que à partir de pas moins de deux mais pas plus de sept bits de code "0" sont amenés à exister entre tout bit de code "1" dans la séquence de codes convertie et un bit de code "1" produit ensuite dans celle-ci.

8. Un système de codage de données binaires selon la revendication 7 caractérisé en ce que les quatre bits immédiatement précédant les données de 2 bits et également les quatre bits immédiatement succédant celles-ci sont détectés et en ce que les données de 2 bits sont converties en données de 4 bits en utilisant l'algorithme du tableau de conversion suivant S5:

TABLEAU DE CONVERSION S5

| Données d'origine | Code converti | Conditions |
|---|---|---|
| A | Y000 | |
| B | 0010 | |
| C | 0100 | "$E_2E_1$"≠"C" et "$L_1L_2$"="D" |
| C | 0001 | "$E_2E_1$"="C" et "$L_1L_2$"="D" |
| C | 0000 | "$E_2E_1$"="C", "$L_1L_2$"="C" et "$L_3L_4$"="D" |
| C | 0100 | "$E_2E_1$"≠"C", "$L_1L_2$"="C" et "$L_3L_4$"="D" |
| C | Y001 | Tous les cas excepté les précédents |
| D | 0000 | "$E_4E_3$"≠"C", "$E_2E_1$"="C" et "$L_1L_2$"≠"B" |
| D | 0001 | "$E_4E_3$"≠"C", "$E_2E_1$"="C" et "$L_1L_2$"="B" |
| D | 0000 | "$E_4E_3$"="C" et "$E_2E_1$"="C" |
| D | 0100 | Tous les cas excepté les précédents |

où

A à D: quatre types de motifs, formés de données de où A="11", B="01", C="10" et D="00"

Y: complément d'une somme logique des deux bits immédiatement avant le bit de code Y dans une séquence de codes convertie

| Y | Deux bits immédiatement avant le bit de code Y |
|---|---|
| 1 | "00" |
| 0 | Tous les cas excepté pour "0" |

et

$E_n$: bit de données précédent, de n-bits, les données de 2 bits à convertir dans une séquence de données d'origine

$L_n$: bit de données succédant, de n-bits, les données de 2 bits à convertir dans une séquence de données d'origine

9. Un système de codage de données binaires selon la revendication 7 caractérisé en ce que les six bits immédiatement précédant les données de 2 bits et également les quatre bits immédiatement succédant celles-ci sont détectés et en ce que les données de 2 bits sont converties en données de 4 bits en utilisant l'algorithme du tableau de conversion suivant S6:

TABLEAU DE CONVERSION S6

| Données d'origine | Code converti | Conditions |
|---|---|---|
| A | Y000 | |
| B | 0000 | "$E_6E_5$"≠"C", "$E_4E_3$"="C" et "$E_2E_1$"="D" |
| B | 0010 | Tous les cas excepté les précédents |
| C | 0100 | "$E_2E_1$"≠"C" et "$L_1L_2$"="D" |
| C | 0001 | "$E_2E_1$"="C" et "$L_1L_2$"="D" |
| C | 0000 | "$E_2E_1$"="C", "$L_1L_2$"="C" et "$L_3L_4$"="D" |
| C | 0100 | "$E_2E_1$"≠"C", $L_1L_2$"="C" et "$L_3L_4$"="D" |
| C | Y001 | Tous les cas excepté les précédents |
| D | 0000 | "$E_4E_3$"≠"C", "$E_2E_1$"="C" et "$L_1L_2$"≠"B" |
| D | 0001 | "$E_4E_3$"≠"C", "$E_2E_1$"="C" et "$L_1L_2$"="B" |
| D | 0010 | "$E_4E_3$"="C" et "$E_2E_1$"="C" |
| D | 0100 | Tous les cas excepté les précédents |

où

A à D: quatre types de motifs, formés de données de 2 bits où A="11", B="01", C="10" et D="00"

Y: complément d'une somme logique des deux bits immédiatement avant le bit de code Y dans une séquence de codes convertie

| Y | Deux bits immédiatement avant le bit de code Y |
|---|---|
| 1 | "00" |
| 0 | Tous les cas excepté pour "00" |

et

$E_n$: bit de données précédent, de n-bits, les données de 2 bits à convertir dans une séquence de données d'origine

$L_n$: bit de données succédant, de n-bits, les données de 2 bits à convertir dans une séquence de données d'origine.

10. Un système de codage de données binaires selon la revendication 7 caractérisé en ce que les quatre bits immédiatement précédant les données de 2 bits et également les quatre bits immédiatement succédant celles-ci sont détectés et en ce que les données de 2 bits sont converties en codes de 4 bits en utilisant l'algorithme du tableau de conversion suivant S7:

TABLEAU DE CONVERSION S7

| Données d'origine | Code converti | Conditions |
|---|---|---|
| A | 000Z | |
| B | 0100 | |
| C | 0010 | "$L_1L_2$"≠"C" et "$E_1E_2$"="D" |
| C | 1000 | "$L_1L_2$"="C" et "$E_2E_1$"="D" |
| C | 0000 | "$L_1L_2$"="C", "$E_2E_1$"="C" et "$L_4L_3$"="D" |
| C | 0010 | "$L_1L_2$"≠"C", "$E_2E_1$"="C" et "$E_4E_3$"="D" |
| C | 100Z | Tous les cas excepté les précédents |
| D | 0000 | "$L_3L_4$"≠"C", "$L_1L_2$"="C" et "$E_2E_1$"≠"B" |
| D | 1000 | "$L_4L_3$"≠"C", "$L_1L_2$"="C" et "$L_1L_2$"="B" |
| D | 0000 | "$L_3L_4$"="C" et "$L_1L_2$"="C" |
| D | 0010 | Tous les cas excepté les précédents |

où

A à D: quatre types de motifs, formés de données de 2 bits où A: "11", B="01", C="10" et D="00"

Z: complément d'une somme logique des deux bits immédiatement après le bit de code "Z" dans une séquence de codes convertie.

| Z | Deux bits immédiatement après le bit de code Z |
|---|---|
| 1 | "00" |
| 0. | Tous les cas excepté pour "00" |

et

$E_n$: bit de données précédent, de n-bits, les données de 2 bits à convertir dans une séquence de données d'origine

$L_n$: bit de données succédant, de n-bits, les données de 2 bits à convertir dans une séquence de données d'origine.

11. Un système de codage de données binaires selon la revendication 7, caractérisé en ce que les quatre bits immédiatement précédant les données de 2 bits et également les six bits immédiatement succédant celles-ci sont détectés et en ce que les données de 2 bits sont converties en codes de 4 bits en utilisant l'algorithme du tableau de conversion suivant S8:

TABLEAU DE CONVERSION S8

| Données d'origine | Code converti | Conditions |
|---|---|---|
| A | 000Z | |
| B | 0000 | "$L_5L_6$"≠"C", "$L_3L_4$"="C" et "$L_1L_2$"="D" |
| B | 0100 | Tous les cas excepté le précédent |
| C | 0010 | "$L_1L_2$"≠"C" et "$E_2E_1$"="D" |
| C | 1000 | "$L_1L_2$"="C" et "$E_2E_1$"="D" |
| C | 0000 | "$L_1L_2$"="C", "$E_2E_1$"="C" et "$E_4E_3$"="D" |
| C | 0010 | "$L_1L_2$"≠"C", "$E_2E_1$"="C" et "$E_4E_3$"="D" |
| C | 100Z | Tous les cas excepté les précédents |
| D | 0000 | "$L_3L_4$"≠"C", "$L_1L_2$"="C" et "$E_2E_1$"≠"B" |
| D | 1000 | "$L_3L_4$"≠"C", "$L_1L_2$"="C" et "$E_2E_1$"="B" |
| D | 0100 | "$L_3L_4$"="C" et "$L_1L_2$"="C" |
| D | 0010 | Tous les cas excepté les précédents |

où

A à D: quatre types de motifs formés de 2 bits et représentés, par exemple, par A="11", B="01", C="10" et D="00"

Z: complément d'une somme logique des deux bits immédiatement après le bit de code "Z" dans une séquence convertie

| Z | Deux bits immédiatement après le bit de code Z |
|---|---|
| 1 | "00" |
| 0 | *Tous les excepté pour "00"* |

et

$E_n$: bit de données précédent, de n-bits, les données de 2 bits à convertir dans une séquence de données d'origine

$L_n$: bit de données succédant, de n-bits, les données de 2 bits à convertir dans une séquence de données d'origine.

12. Un système de décodage de données binaires caractérisé en ce que, en divisant la séquence de codes convertie selon le système de codage de données binaires selon l'une des revendications 2 à 6, à des intervalles de quatre bits, et en décodant et convertissant les codes de 4 bits divisés précités en codes de données chacun formé de deux bits selon un algorithme de décodage prédéterminé, mettant en relation chaque motif de code de 4 bits possible à un motif de données de 2 bits, lorsque les motifs de codes formés desdits codes de 4 bits sont identiques avec l'un des deux types de motifs prédéterminés (0000, 0100) jusqu'à trois bits de code immédiatement précédant et succédant lesdits codes de 4 bits sont détectés, lesdits bits de code détectés sont utilisés pour changer l'algorithme de décodage pour décoder lesdites données de 4 bits en codes de données de 2 bits.

13. Un système de décodage de données binaires caractérisé en ce que, en divisant la séquence de codes convertie et selon le système de codage de données binaires selon l'une des revendications 7 à 11 à des intervalles de quatre bits et en décodant et convertissant lesdits codes de 4 bits divisés en codes de données chacun formé de deux bits, selon un algorithme de décodage prédéterminé, mettant en relation chaque motif de codes de 4 bits possible à un motif de données de 2 bits, lorsque les motifs de codes

formés desdits codes de 4 bits sont identiques avec l'un des trois types de motifs prédéterminés (0000, 0100, 0001) jusqu'à trois bits de code immédiatement précédant et succédant le code de 4 bits sont détectés, lesdits bits de code détectés sont utilisés pour changer l'algorithme de décodage pour décoder lesdits codes de bits en codes de données de 2 bits.

FIG. 1

To
(ORIGINAL BINARY DATA)
(a)
1 0 1 1 0 0 1
(MFM SYSTEM)
(b)
0 1 0 0 0 1 0 1 0 0 1 0 0 1
(NRZI SIGNAL OF MFM SYSTEM)
(c)
(3PM SYSTEM)
(d)
1 0 0 0 0 0 0 0 1 0 0 0 1 0
(NRZI SIGNAL OF 3PM SYSTEM)
(e)

FIG. 2

1
6
T
IN
Q7 Q6 Q5 Q4 Q3 Q2 Q1 Q0
SHIFT REGISTER
a
A7 A6 A5 A4 A3 A2 A1 A0
ROM
D3 D2 D1 D0
7
E F G H
8
9
T
SF/L
e
SHIFT REGISTER
d
2
4
5
1/2
1/2
b
c
1/2 FREQUENCY DIVIDER
3
1/2 FREQUENCY DIVIDER

FIG. 3

6A
SHIFT REGISTER
1
T
IN
Q9 Q8 Q7 Q6 Q5 Q4 Q3 Q2 Q1 Q0
a
30
31
32
A7 A6 A5 A4 A3 A2 A1 A0
ROM
D3 D2 D1 D0
7A
8
E F G H
T
SF/L
e
9
d
SHIFT REGISTER
4
5
2
1/2
1/2
b
c
1/2 FREQUENCY DIVIDER
3
1/2 FREQUENCY DIVIDER

FIG. 4

Q2 OR Q4
1 1 0 1 0 0 0 1 1
(a)
(b)
b
(c)
c
(d)
d
1 0 0 0 0 0 1 0 0 1 0 0 0 0 1 0 0 0
(e)
e

FIG. 5

10
e
T
IN
13
SHIFT REGISTER
Q12 Q11 Q10 Q9 Q8 Q7 Q6 Q5 Q4 Q3 Q2 Q1 Q0
f
14
15
A7 A6 A5 A4 A3 A2 A1 A0
ROM
D1 D0
16
G H
T
SF/L
k
20
SHIFT REGISTER
j
19
17
18
11
1/2
1/2
g
i
21
12
1/2 FREQUENCY DIVIDER
1/2 FREQUENCY DIVIDER
h


FIG. 6

1 0 0 0 0 0 0 1 0 0 1 0 0 0 0 1 0 0 0
(f)
f
(g)
g
(h)
h
(i)
i
(j)
j
1 1 0 1 0 0 0 1
(k)
k